# EUROPEAN PATENT SPECIFICATION

(11) **EP 0 804 045 B1**
(45) Date of publication and mention of the grant of the patent: **01.06.2005**
(21) Application number: 97850034.6
(22) Date of filing: 07.03.1997
(51) Int. Cl.: H04Q 7/22, H04Q 7/32

(54) **Adaptive multimedia service**
Adaptiver Multimediadienst
Service multimédia adaptatif

(30) Priority: 24.04.1996 SE 9601558
(43) Date of publication of application: 29.10.1997
(73) Proprietor: TELIA AB, 123 86 Farsta (SE)
(72) Inventor: Emilsson, Stellan, 655 94 Karlstad (SE)
(74) Representative: Hopfgarten, Nils

(56) References cited:
- EP-A- 0 459 344
- WO-A-92/17943
- WO-A-93/16550

## Description

### FIELD OF THE INVENTION

The present invention relates to a device and a method at a mobile telecommunications system or data communications system which makes changes of one in said system provided multimedia service possible to fit to the need of different users and geographical areas within which said users may be in said system.

### PRIOR ART

Multimedia services are very complex, which implies that it is very important that they both can be adapted to the need of a user and to the conditions of the carrier network.

In an environment with competing operators of multimedia services it is important that the operators get a possibility to create a distinctive image for themselves in spite of the fact that they maybe together utilize the same access network and carrier network.

EP-A-0 459 344 discloses a device for remote loading of software to a telecommunication terminal, e.g. a mobile phone, connected to a telecommunication network. A plurality of memories are provided in the terminal for stocking different softwares. Memories among said plurality of memories are selected for execution on the terminal of their stored softwares for performing different functions, for example for offering specific services to subscribers.

In WO 93/16550 portable telephone stations are described which accept user inserted storage media such as cards or disks storing data or information. The stations include a radio transceiver for connection to a telephone network. Interaction is provided between the database in user disks and distributed databases in the network.

One aim with the present invention consequently is to attend to that the part of the mobile multimedia service which is implemented in software in the mobile terminal can be updated and adapted to specific user conditions.

Another aim with the present invention consequently is to attend to that one utilizes the frequency bandwidth of the mobile channel in an optimal way. This is of course of the greatest importance when the mobile channel is utilized together by a number of different users and operators.

### SUMMARY OF THE INVENTION

The above mentioned aims are achieved with a device and a method which is set out in the characterizing part of claim 1 and claim 4 respectively.

The present invention gives rise to a lot of different advantages such as, for instance:
- an operator can offer a tailored mobile multimedia service connected to a user's identity, a user's wishes or geographical position by loading down different versions of software components. In this way,for instance different handover algorithms and video encoders can be selected depending on geographical position.
- operators can design their mobile multimedia services independent of each other in spite of the fact that they are using the same carrier network and access technology, and in addition load down the softare which constitute the implementation of the service.
- an operator can control how a mobile terminal utilizes its carrier network.
- the costs at a change of a service will be comparatively low.
- a rapid effect is achieved by a changed service.

### BRIEF DESCRIPTON OF THE DRAWING

In the following a detailed description of an embodiment of the invention is given with reference to the only drawing.

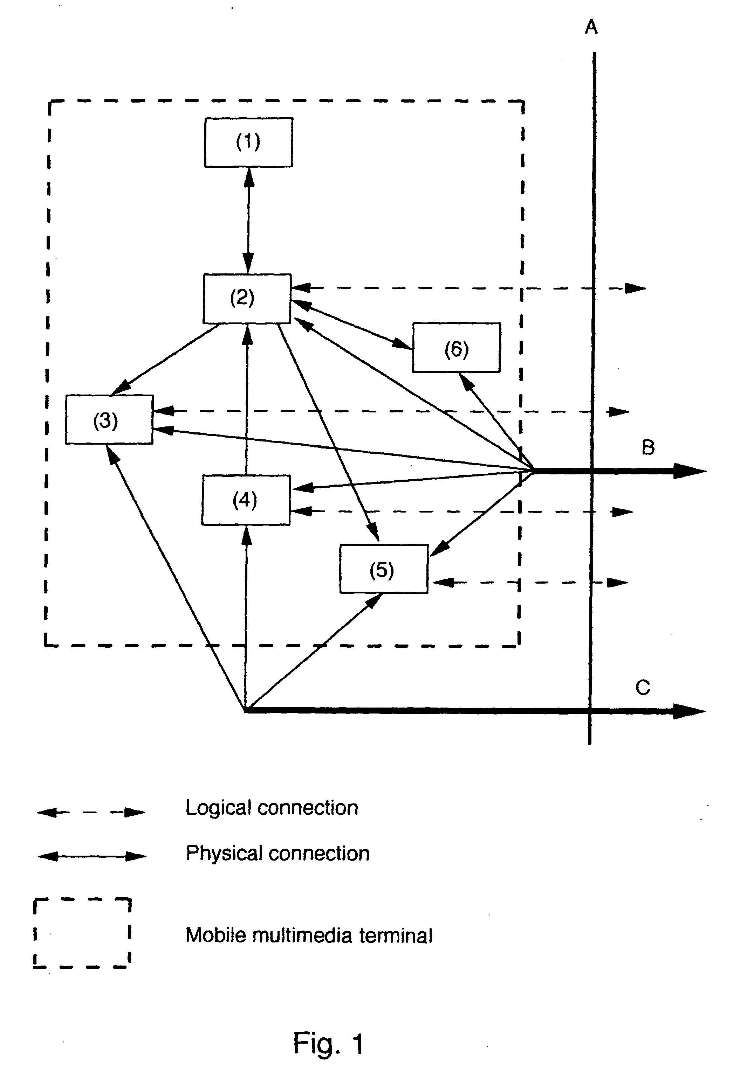

Figure 1 shows the construction of a mobile multimedia terminal according to the present invention.

### DETAILED DESCRIPTION OF AN EMBODIMENT OF THE INVENTION

The invention describes how the parts of a mobile multimedia service which is executed in a mobile terminal can be structured in the form of software components. This structure implies that an operator which provides the service is given a possibility to distribute the service part by part via a data transmission facility (control channel) to a user terminal when there is a need. In mobile connections where one has to utilize available bandwidth very efficiently, it is important that one only distributes the software components when there is a need (for instance at a new version) and that one by the suggested structure only need to distribute a part of the software (a software component).

This involves that one utilizes the bandwidth of the control channel in an optimal way by only transmitting the part of the multimedia service which has to be transmitted, instead of, as in the previous technology, transmit the whole multimedia service packet.

In the following now will be described how the mobile terminal in Figure 1 is constructed and how it functions.

The mobile terminal includes a number of units 1, 2, 3, 4, 5, 6 which each can be updated with new software. These units are the control application unit 1, the service function unit 2, the video application unit 3, the audio application unit 4, the data application unit 5, and the access function unit 6. Each unit consequently relates to a special software component.

A mobile multimedia service which is executed in the mobile terminal in Figure 1 consequently is divided into the following software components based on different functional contents:
1. The control application 1, via which a user can control the multimedia service and get information of its behaviour.
2. Applications such as for instance video 3, audio 4 and data applications 5. These can both include functionality to communicate with the world around (for instance with a user or corresponding application at another user) and internal processing of incoming or outgoing information.
3. The service function 2 which controls the behaviour of the multimedia service, which also includes how the service function 2 of the mobile terminal communicates with the service function which is in the fixed network (which is administered by an operator) and service logic in other terminals. The service function controls the applications 3, 4 and 5 based on the user's wishes and the operator's service design.
4. The access function 6 which includes for instance logic which handles signalling towards control functions in the fixed network which are needed to establish a connection, control and surveillance of the bandwidth utilization of the mobile terminal and handover algorithms.

These units 1-6 which execute their specific software components are strongly connected to each other and exchange information with each other in form of signals. By the operator distributing all parts which the mobile multimedia service consist of, he/she also will be reponsible for that the information exchange between the software components will function.

By the different parts of the mobile multimedia service being implemented in form of software, they also can be distributed to the user via a control channel. At start this control channel is first established, on which the mobile terminal can check version number for the software components which are stored in the mobile terminal. For the software components the version numbers of which are not in accordance with the version number the operator signals, new software components are loaded down to the mobile terminal.

There also shall be a possibility to load the mobile terminal with the above said software components without using a radio channel, for instance via an Ethernet-connection or CD-ROM-disk.

To sum up, one can say that the invention in brief is characterized in that parts of a multimedia service which are executed in a mobile terminal are structured in form of different software components. The structure implies that an operator which provides the service is given possibility to distribute the service in different parts via a data transmission facility, control channel, to a user terminal. This means that the service is divided into a number of software components such as control application, applications for video, audio, data, etc and a service function. By structuring the service in this way, the operator can tailor and, when appropriate, upgrade a multimedia service connected to a user's identity, wishes or geographical position, by loading, via the control channel, different versions of software components.

The above described is only to be regarded as an advantageous embodiment of the invention, and the scope of protection in only defined by what is indicated in the following patent claims.

## Claims

1. Device at a mobile telecommunications system or data communications system which makes changes of one in said system provided multimedia service possible to fit to the need of different users and geographical areas within which said users can be in said system, which device includes an arbitrary number of units (1, 2, 3, 4, 5, 6), in each of which specific software components are stored, updated and executed, said software components corresponding to parts of a complete multimedia service, based on the functions of said units, **characterized in that** a control channel is provided for distribution of the service to a user, only when needed and part by part, by distributing only relevant software components to a terminal of said user.

2. Device according to claim 1, **characterized in that** said control channel is provided for transmission and implementation in said units (1, 2, 3, 4, 5, 6) of said software components.

3. Device according to claims 1 or 2, **characterized in that** said units comprise a control application unit (1), a service function unit (2), a video application unit (3), an audio application unit (4), a data application unit (5) and an access function unit (6).

4. Device according to claim 3, **characterized in that** said control application unit (1) is adapted to be used by the user to control the multimedia service and obtain information about the behaviour of said service, **in that** said video (3), audio (4), and data application units (5) contain functionalities to communicate with the world around and to internally process incoming or outgoing information, **in that** said service function unit (2) is arranged to control the behaviour of the multimedia service and to control the application units (3, 4, 5) based on the wishes of said users and the service construction of an operator transmitting and implementing said software components or a complete multimedia service in said units, and **in that** said access function unit (6) includes logic provided to signal to the fixed network to establish a connection, control and surveillance of the bandwidth utilization of a mobile terminal and to determine a suitable handover algorithm.

5. Device according to any of the preceding claims, **characterized in that** said units (1, 2, 3, 4, 5, 6) in said mobile terminals are adapted to be loaded with said software components via an Ethernet-connection or a CD-ROM-disk.

6. Method at a mobile telecommunications system or data communications system which makes changes of one in said system provided multimedia service possible to fit the needs of different users and geographical areas within which said users can be in said system, wherein said multimedia service, provided by an operator, is structured in form of an arbitrary number of software components, and said operator distributes said multimedia service in different parts corresponding to said software components via a control channel to a mobile user terminal, **characterized in that** the service is distributed to a user, only when needed and part by part, by distributing only relevant software components to a terminal of said user.

7. Method according to claim 6, **characterized in that** said multimedia service to a mobile user terminal is upgraded and transmitted by said operator by loading down, via the control channel, only that software component or those components which are required for said terminal for obtain requested multimedia service.

8. Method according to claims 6 or 7, **characterized in that** said multimedia service is divided into a number of software components for control applications, applications for video, audio, data, service function applications and access function applications.

9. Method according to any of the claim 6 - 8,**characterized in that** said mobile terminal is loaded with said software components via an Ethernet-connection or a CD-ROM-disk.

## Patentansprüche

1. Einrichtung bei einem mobilen Telekommunikationssystem oder Datenkommunikationssystem, welche ermöglicht, Änderungen eines Multimedia-Service, der in dem System geboten wird, dem Bedarf verschiedener Benutzer und geographischer Bereiche anzupassen, innerhalb derer sich die Benutzer in dem System aufhalten können, welche Einrichtung eine beliebige Anzahl von Einheiten (1, 2, 3, 4, 5, 6) enthält, in denen jeweils spezifische Softwarekomponenten gespeichert, aktualisiert und ausgeführt werden, wobei die Softwarekomponenten Teilen eines vollständigen Multimedia-Service entsprechen, welcher auf den Funktionen der Einheiten beruht, **dadurch gekennzeichnet, dass** ein Steuerkanal zwecks Zuteilung des Service an einen Benutzer, nur im Bedarfsfall und Teil für Teil, zur Verfügung steht, indem lediglich relevante Softwarekomponenten an ein Endgerät des Benutzers zugeteilt werden.

2. Einrichtung nach Anspruch 1, **dadurch gekennzeichnet, dass** der Steuerkanal zur Übertragung und Implementierung der Softwarekomponenten in den Einheiten (1, 2, 3, 4, 5, 6) zur Verfügung steht.

3. Einrichtung nach Anspruch 1 oder 2, **dadurch gekennzeichnet, dass** die Einheiten eine Steuer-Anwendungseinheit (1), eine Service-Funktionseinheit (2), eine Video-Anwendungseinheit (3), eine Audio-Anwendungseinheit (4), eine Daten-Anwendungseinheit (5) und eine Zugangs-Funktionseinheit (6) einschließen.

4. Einrichtung nach Anspruch 3, **dadurch gekennzeichnet, dass** die Steuer-Anwendungseinheit (1) dazu ausgebildet ist, dass sie von dem Benutzer zum Steuern des Multimedia-Service und zum Einholen von Information über das Verhalten des Service verwendet wird, dass die Video- (3), Audio- (4) und Daten-(5) - Anwendungseinheiten Funktionalitäten enthalten, um mit der Außenwelt zu kommunizieren und eintreffende oder ausgehende Information intern zu verarbeiten, dass die Service-Funktionseinheit (2) eingerichtet ist, das Verhalten des Multimedia-Service zu steuern und die Anwendungseinheiten (3, 4, 5) auf Grundlage der Wünsche der Benutzer und der Service-Konstruktion eines Betreibers zu steuern, der die Einheiten die Softwarekomponenten oder einen vollständigen Multimedia-Service überträgt und implementiert, und dass die Zugangs-Funktionseinheit (6) Logik enthält, die zur Verfügung steht, um dem Festnetz Signale zur Herstellung einer Verbindung, zur Steuerung und Überwachung der Bandbreitennutzung eines mobilen Endgeräts und zur Bestimmung eines geeigneten Übergabe-Algorithmus zu geben.

5. Einrichtung nach einem der vorangehenden Ansprüche, **dadurch gekennzeichnet, dass** die Einheiten (1, 2, 3, 4, 5, 6) in den mobilen Endgeräten so gestaltet sind, dass sie über eine Ethernetverbindung oder von einer CD ROM mit den Softwarekomponenten geladen werden.

6. Verfahren bei einem mobilen Telekommunikationssystem oder Datenkommunikationssystem, welches ermöglicht, Änderungen eines Multimedia-Service, der in dem System geboten wird, dem Bedarf verschiedener Benutzer und geographischer Bereiche anzupassen, innerhalb derer sich die Benutzer in dem System aufhalten können, wobei der Multimedia-Service, welcher von einem Betreiber zur Verfügung gestellt wird, in Form einer beliebigen Anzahl von Softwarekomponenten strukturiert ist, und der Betreiber den Multimedia-Service in verschiedenen Teilen, welche den Softwarekomponenten entsprechen, über einen Steuerkanal an ein Endgerät eines mobilen Benutzers zuteilt, **dadurch gekennzeichnet, dass** der Service an einen Benutzer, nur im Bedarfsfall und Teil für Teil, zugeteilt wird, indem lediglich relevante Softwarekomponenten an ein Endgerät des Benutzers zugeteilt werden.

7. Verfahren nach Anspruch 6, **dadurch gekennzeichnet, dass** der Multimedia-Service zu einem Endgerät eines mobilen Benutzers von dem Betreiber aktualisiert und übertragen wird, indem nur jene Softwarekomponente oder jene Softwarekomponenten über den Steuerkanal heruntergeladen werden, welche das Endgerät für den Erhalt des angeforderten Multimedia-Service benötigt.

8. Verfahren nach Anspruch 6 oder 7, **dadurch gekennzeichnet, dass** der Multimedia-Service unterteilt ist in eine Anzahl von Softwarekomponenten für Steuer-Anwendungen, für Video-, Audio-, Daten-Anwendungen, für Service-Funktionsanwendungen und für Zugangs-Funktionsanwendungen.

9. Verfahren nach einem der Ansprüche 6 bis 8, **dadurch gekennzeichnet, dass** das mobile Endgerät über eine Ethernetverbindung oder von einer CD ROM mit den Softwarenkomponenten geladen wird.

## Revendications

1. Dispositif dans un système de télécommunication mobile ou un système de communication de données qui permet des changements d'un service parmi les dits services multimédia fournis par le système afin qu'il corresponde aux besoins des différents utilisateurs et des différentes zones géographiques à l'intérieur desquelles les dits utilisateurs peuvent se trouver dans le dit système, ce dispositif comprenant un nombre arbitraire d'unités (1, 2, 3, 4, 5, 6), dans chacune desquelles des composants de logiciel spécifiques sont stockés, mis à jour et exécutés, les dits composants de logiciel correspondant à des parties d'un service multimédia complet, sur la base des fonctions des dites unités, **caractérisé en ce qu'**un canal de commande est prévu pour distribution du service à un utilisateur, seulement lorsque c'est nécessaire et partie par partie, par distribution seulement des composants de logiciel concernés à un terminal du dit utilisateur.

2. Dispositif selon la revendication 1, **caractérisé en ce que** le dit canal de commande est prévu pour transmission et mise en oeuvre dans les dites unités (1, 2, 3, 4, 5, 6) de dits composants de logiciel.

3. Dispositif selon la revendication 1 ou 2, **caractérisé en ce que** les dites unités comprennent une unité d'application de commande (1), une unité de fonction de service (2), une unité d'application vidéo (3), une unité d'application audio (4), une unité d'application de données (5) et une unité de fonction d'accès (6).

4. Dispositif selon la revendication 3, **caractérisé en ce que** la dite unité d'application de commande (1) est prévue pour être utilisée par l'utilisateur afin de commander le service multimédia et d'obtenir des informations concernant le comportement du dit service, **en ce que** les dites unités d'application vidéo (3), audio (4) et de données (5) contiennent des fonctionnalités pour communiquer avec le monde extérieur et pour traiter de façon interne les informations entrantes ou sortantes, **en ce que** la dite unité de fonction de service (2) est prévue pour commander le comportement du service multimédia et pour commander les unités d'application (3, 4, 5) sur la base des souhaits des dits utilisateurs et de la construction de service d'un opérateur transmettant et exécutant les dits composants de logiciel ou un service multimédia complet dans les dites unités, et **en ce que** la dite unité de fonction d'accès (6) comprend une logique prévue pour signaler au réseau fixe qu'il faut établir une connexion, une commande et une surveillance de l'utilisation de largeur de bande d'un terminal mobile et pour déterminer un algorithme de transfert approprié.

5. Dispositif selon une quelconque des revendications précédentes, **caractérisé en ce que** les dites unités (1, 2, 3, 4, 5, 6) dans les dits terminaux mobiles sont prévues pour être chargées avec les dits composants de logiciel via une connexion Ethernet ou un disque CD-ROM.

6. Procédé dans un système de télécommunication mobile ou un système de communication de données qui permet des changements d'un des dits services multimédia fournis par le système afin qu'il corresponde aux besoins de différents utilisateurs et de différentes zones géographiques à l'intérieur desquelles les dits utilisateurs peuvent se trouver dans le dit système, dans lequel le dit service multimédia, fourni par un opérateur, est structuré sous forme d'un nombre arbitraire de composants de logiciel, et le dit opérateur distribue le dit service multimédia en différentes parties correspondant aux dits composants de logiciel via un canal de commande à un terminal d'utilisateur mobile, **caractérisé en ce que** le service est distribué à un utilisateur seulement lorsque c'est nécessaire et partie par partie, par distribution seulement des composants de logiciel concernés à un terminal du dit utilisateur.

7. Procédé selon la revendication 6, **caractérisé en ce que** le dit service multimédia à un terminal d'utilisateur mobile est amélioré et transmis par le dit opérateur par téléchargement, via le canal de commande, seulement du ou des composants de logiciel qui sont nécessaires pour que le dit terminal obtienne le service multimédia demandé.

8. Procédé selon la revendication 6 ou 7, **caractérisé en ce que** le dit service multimédia est divisé en un certain nombre de composants de logiciel pour des applications de commande, des applications pour vidéo, audio et données, des applications de fonction de service et des applications de fonction d'accès.

9. Procédé selon une quelconque des revendications 6 à 8, **caractérisé en ce que** le dit terminal mobile est chargé avec les dits composants de logiciel via une connexion Ethernet ou un disque CD-ROM.
